# EUROPÄISCHE PATENTSCHRIFT

(11) **EP 0 844 592 B1**
(45) Veröffentlichungstag und Bekanntmachung des Hinweises auf die Patenterteilung: **12.02.2003**
(21) Anmeldenummer: 97119786.8
(22) Anmeldetag: 12.11.1997
(51) Int. Cl.: G07F 7/06

(54) **Transportwagen**
Transport trolley
Chariot transporteur

(30) Priorität: 21.11.1996 DE 19648311
(43) Veröffentlichungstag der Anmeldung: 27.05.1998
(73) Patentinhaber: Wanzl Metallwarenfabrik GmbH, 89336 Leipheim (DE)
(72) Erfinder: Wanzl, Rudolf, 89340 Leipheim (DE)

(56) Entgegenhaltungen:
- DE-A- 4 324 889
- DE-U- 9 313 499
- FR-A- 2 733 197

## Beschreibung

Die Erfindung betrifft einen Transportwagen, insbesondere einen Einkaufswagen, der zwei Griffträger, einen Schiebegriff und ein Münzschloss aufweist, wobei der Schiebegriff mit einem Ende an einer der beiden Griffträger befestigt und mit seinem anderen Ende mit dem Münzschloss verbunden ist und wobei das Münzschloss am anderen Griffträger befestigt ist.

Zum nächstliegenden Stand der Technik zählt ein Transportwagen, der in der EP 0 442 016 A1 beschrieben ist. Die darin beschriebene erfinderische Idee ist inzwischen verwirklicht worden. Der dabei entstandene Transportwagen weist einen Nachteil auf. Dieser Nachteil zeigt sich durch die Wahl der steckbaren Verbindung von Schiebegriff und Münzschloss. Um nämlich den Schiebegriff auf das Münzschloss aufstecken zu können, ist zwischen dem Schiebegriff und dem Münzschloss ein gewisses Spiel erforderlich. Dieses Spiel lässt eine mehr oder weniger "wackelige" Verbindung zu, die mit zunehmendem Gebrauch des Transportwagens nicht stabiler wird. Es ist sogar zu befürchten, dass die beschriebene Verbindung im Laufe der Zeit mehr und mehr ausschlägt, so dass dies dem Benutzer eines derartigen Transportwagens nicht mehr zugemutet werden kann.

Gleiches gilt auch für einen Transportwagen, der in der DE 93 13 499.1 U1 beschrieben ist. Bei diesem Transportwagen ist der Schiebegriff auf einen am Münzschloss befindlichen Vorsprung aufgesteckt.

Es ist Aufgabe der Erfindung, einen gattungsgemäßen Transportwagen so weiterzuentwickeln, dass die eben beschriebenen Nachteile auf einfache Weise vermieden werden.

Die Lösung der Aufgabe besteht darin, dass die Verbindung des Schiebegriffes mit dem Münzschloss zusätzlich durch ein Sicherungsmittel erfolgt, das den Schiebegriff mit dem Münzschloss verspannt.

Die Verbindung zwischen dem Schiebegriff und dem Münzschloss erfolgt somit nicht nur, wie bekannt, durch Formschluss, sondern diese Verbindung wird zusätzlich auf kraftschlüssige Weise stabilisiert und ohne großen technischen Aufwand verbessert. Das eingangs erwähnte "Wackeln" tritt nicht mehr auf. Dies ist ein entscheidender Vorteil.

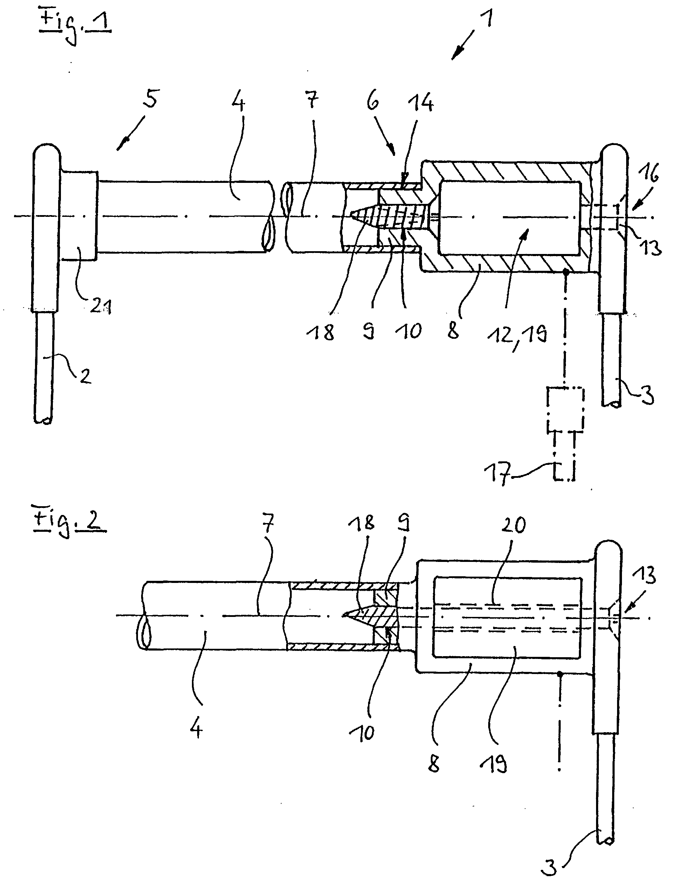

Die Erfindung wird anhand von zwei Ausführungsbeispielen gemäß den Figuren 1 und 2 näher erläutert.

Die Erfindung schließt alle gängigen, von Hand bewegbaren Transportwagen 1 ein, die einen quer zur Schieberichtung des Transportwagens 1 angeordneten, stab- oder rohrförmigen Schiebegriff 4 aufweisen und der von Griffträgern 2, 3 gehalten wird. Dazu zählen auch alle üblichen Einkaufswagen. Derartige Transportwagen 1 sind in der Regel so gestaltet, daß sie sich mit gleichen Transportwagen 1 platzsparend ineinanderschieben lassen. In den dabei entstandenen Reihenformationen sind die Transportwagen 1 in bekannter Weise mit Hilfe sogenannter Münz- oder Pfandschlösser 8 aneinandergekettet. Mittels eines Pfandes, das im Münzschloß 8 während des Gebrauchs des Transportwagens 1 verbleibt, kann ein Transportwagen 1 abgekoppelt werden. Beim Zurückbringen des Wagens und nach erneutem Ankoppeln erhält der Wagenbenutzer wieder sein Pfand zurück. Da dies, wie auch die Gestaltung solcher Transportwagen 1 bekannt ist, beschränkt sich die nachfolgende Beschreibung auf die Verbindung von Griffträgern 2, 3, Schiebegriff 4 und Münzschloß 8.

Fig. 1 zeigt zwei auf Abstand gehaltene Griffträger 2, 3, die Bestandteil des Transportwagens 1 sind. Die Griffträger 2, 3 sind gewöhnlich aus Draht oder Rohr gefertigt. Sie können unterschiedlichst geformt sein. Zwischen den beiden Griffträgern 2, 3 sind ein Schiebegriff 4 und ein Münzschloß 8 angeordnet. Der Schiebegriff 4 ist mit einem Ende 5 -in der Zeichnung ist dies links dargestellt- am Griffträger 2 befestigt, wobei es unerheblich ist, ob die Befestigung auf direkte Weise oder indirekt mit Hilfe einer sogenannten Griffschutzkappe 21 erfolgt, die in der Zeichnung der Deutlichkeit wegen auch dargestellt ist. In der Zeichnung ist rechts der Griffträger 3 dargestellt, an welchem ein Münzschloß 8 beispielsweise auf jene Art und Weise befestigt ist, wie dies in der EP 0 442 016 A1 beschrieben ist. Die Art der Befestigung ist hierbei jedoch unerheblich. Der Schiebegriff 4 ist mit seinem anderen Ende 6 am Münzschloß 8 beispielsweise so abgestützt, daß ein am Münzschloß 8 befindlicher Vorsprung 9 formschlüssig ein Stück weit in den rohrförmigen Schiebegriff 4 ragt. Der Vorsprung 9 ist geschlitzt und besitzt einen Durchbruch 10, so daß der Vorsprung 9 dübelartige Eigenschaften aufweist. Das Münzschloß 8 weist einen Innenraum 12 auf, welcher zur Aufnahme zumindest eines Großteils einer bekannten und deshalb nicht näher zu beschreibenden Kopplungsmechanik 19 vorgesehen ist. Zu dieser Mechanik gehört üblicherweise auch ein Schlüssel 17, der bevorzugt mit Hilfe einer Kette am Münzschloß 8 befestigt ist. Im Bereich des Griffträgers 3 besitzt das Münzschloß 8 eine Öffnung 13, die zum Innenraum 12 führt und die der Aufnahme eines nicht näher dargestellten Sicherungsmittels 16 dient, das ein Lösen des Münzschlosses 8 vom Griffträger 3 verhindert. Die Kopplungsmechanik 19 ist als Baugruppe, beispielsweise als Kassette gestaltet, die in den Innenraum 12 des Münzschlosses 8 einsetzbar und auf geeignete Weise mit diesem verriegelbar ist. Der Durchbruch 10 des Vorsprunges 9 führt zum Innenraum 12 des Münzschlosses 8 und liegt sowohl auf der Längsachse 7 des Schiebegriffes 4 als auch bevorzugt auf der Längsachse der Öffnung 13. Im Vorsprung 9 ist ein Sicherungsmittel 18, beispielsweise eine Holzschraube so weit eingefügt und eingeschraubt, daß das Münzschloß 8 mit Hilfe des Sicherungsmittels 18 mit dem Schiebegriff 4 verspannt ist. Dies geschieht beim Einschrauben des Sicherungsmittels 18 durch Aufweiten des Vorsprunges 9, so daß dessen Wandung 14 allseits gegen die Innenwand des Schiebegriffes 4 gedrückt und somit eine kraftschlüssige Verbindung herbeigeführt wird. Bei der Montage von Schiebegriff 4 und Münzschloß 8 wird zuerst das Sicherungsmittel 18 durch den leeren Innenraum 12 des Münzschlosses 8 zum Durchbruch 10 des Vorsprunges 9 geführt und anschließend durch ein durch die Öffnung 13 eingeführtes Schraubwerkzeug verschraubt. Danach wird die Kopplungsmechanik 19, bevorzugt in Kassettenform, in den Innenraum 12 eingesetzt.

Will man die eben beschriebene Art des Einsetzens des Sicherungsmittels 18 vermeiden, so ist es gemäß Fig. 2 auch möglich, an der Kopplungsmechanik 19 einen Durchbruch 20 oder in ähnlicher Weise einen Einschnitt oder eine Nut vorzusehen, der oder die auf der gemeinsamen Längsachse 7 von Schiebegriff 4 und Öffnung 13 vorgesehen sind. Durch den dadurch geschaffenen Raum ist es möglich, ein von außen her das Münzschloß 8 durchdringendes Sicherungsmittel 18 zuerst durch die auf der Längsachse 7 des Schiebegriffes 4 angeordnete Öffnung 13 und dann durch die Kopplungsmechanik 19 hindurch zum Durchbruch 10 des Vorsprunges 9 zu führen und anschließend das Sicherungsmittel 18 mit dem dübelartigen Vorsprung 9 zu verschrauben. Dabei kann das Sicherungsmittel 18 auch durchaus über die Kontur des Vorsprunges 9 hinausragen. Das auf der Längsachse 7 des Schiebegriffes 4 angeordnete Sicherungsmittel 18 durchdringt somit zumindest teilweise das Münzschloß 8, vgl. auch Fig. 1. Alle weiteren Merkmale des Münzschlosses 8, des Schiebegriffes 4 und der Griffträger 2, 3, die hier nicht beschrieben wurden, können dem Text zu Fig. 1 entnommen werden.

## Patentansprüche

1. Transportwagen (1), insbesondere Einkaufswagen, der zwei Griffträger (2, 3), einen Schiebegriff (4) und ein Münzschloss (8) aufweist, wobei der Schiebegriff (4) mit einem Ende an einem der beiden Griffträger (2, 3) befestigt und mit seinem anderen Ende mit dem Münzschloss (8) verbunden ist und wobei das Münzschloss (8) am anderen Griffträger (2 oder 3) befestigt ist, **dadurch gekennzeichnet, dass** die Verbindung des Schiebegriffes (4) mit dem Münzschloss (8) zusätzlich durch ein Sicherungsmittel (18) erfolgt, das den Schiebegriff (4) mit dem Münzschloss (8) verspannt.

2. Transportwagen nach Anspruch 1, **dadurch gekennzeichnet, dass** das Sicherungsmittel (18) das Münzschloss (8) zumindest teilweise durchdringt.

3. Transportwagen nach Anspruch 1 oder 2, **dadurch gekennzeichnet, dass** sich das Sicherungsmittel (18) in einem am Münzschloss (8) befindlichen Vorsprung (9) befindet, der mit dem Schiebegriff (4) verbunden ist.

4. Transportwagen nach einem der Ansprüche 1 bis 3, **dadurch gekennzeichnet, dass** das Münzschloss (8) einen Innenraum (12) aufweist und dass der Vorsprung (9) einen zum Innenraum (12) führenden Durchbruch (10) aufweist, der zur Aufnahme des Sicherungsmittels (18) bestimmt ist.

5. Transportwagen nach Anspruch 4, **dadurch gekennzeichnet, dass** der Durchbruch (10) auf der Längsachse (7) des Schiebegriffes (4) angeordnet ist.

6. Transportwagen nach einem der Ansprüche 1 bis 5, **dadurch gekennzeichnet, dass** der Vorsprung (9) dübelartig ausgebildet ist.

7. Transportwagen nach einem der Ansprüche 1 bis 6, **dadurch gekennzeichnet, dass** das Münzschloss (8) eine auf der Längsachse (7) des Schiebegriffes (4) angeordnete Öffnung (13) aufweist, die zum Innenraum (12) führt.

8. Transportwagen nach einem der Ansprüche 1 bis 7, **dadurch gekennzeichnet, dass** der Innenraum (12) zur Aufnahme der Kopplungsmechanik (19) des Münzschlosses (8) bestimmt ist und dass die Kopplungsmechanik (19) einen Durchbruch (20) oder dergleichen aufweist, der auf der Längsachse (7) des Schiebegriffes (4) angeordnet ist und einen Raum für das Sicherungsmittel (18) bildet.

9. Transportwagen nach einem der Ansprüche 1 bis 8, **dadurch gekennzeichnet, dass** das Sicherungsmittel (18) durch die Öffnung (13) und durch die Kopplungsmechanik (19) zum Durchbruch (10) des Vorsprunges (9) geführt ist.

## Claims

1. A trolley (1), in particular a shopping trolley, comprising two handle supports (2, 3), a pushing handle (4) and a coin lock (8), wherein the pushing handle (4) is fixed at one end to one of the two handle supports (2, 3) and is connected at its other end to the coin lock (8), and wherein the coin lock (8) is fixed to the other handle support (2 or 3), **characterised in that** the pushing handle (4) is additionally connected to the coin lock (8) by a securing means (18) which secures the pushing handle (4) to the coin lock (8).

2. A trolley according to claim 1, **characterised in that** the securing means (18) at least partly penetrates the coin lock (8).

3. A trolley according to claim 1 or 2, **characterised in that** the securing means (18) is located in a projection (9) provided on the coin lock (8) and connected to the pushing handle (4).

4. A trolley according to any one of claims 1 to 3, **characterised in that** the coin lock (8) has an inner space (12) and **in that** the projection (9) has a channel (10) which leads to the inner space (12) and is intended to receive the securing means (18).

5. A trolley according to claim 4, **characterised in that** the channel (10) is arranged on the longitudinal axis (7) of the pushing handle (4).

6. A trolley according to any one of claims 1 to 5, **characterised in that** the projection (9) is formed in the manner of a peg.

7. A trolley according to any one of claims 1 to 6, **characterised in that** the coin lock (8) has an opening (13) arranged on the longitudinal axis (7) of the pushing handle (4) and leading to the inner space (12).

8. A trolley according to any one of claims 1 to 7, **characterised in that** the inner space (12) is intended to receive the coupling mechanism (19) of the coin lock (8) and **in that** the coupling mechanism (19) has a channel (20) or the like which is arranged on the longitudinal axis (7) of the pushing handle (4) and forms a space for the securing means (18).

9. A trolley according to any one of claims 1 to 8, **characterised in that** the securing means (18) is guided through the opening (13) and through the coupling mechanism (19) to the channel (10) of the projection (9).

## Revendications

1. Chariot transporteur (1), notamment chariot à provisions comprenant deux supports (2, 3) de poignée, une poignée de poussée (4) et une serrure à monnaie (8), la poignée de poussée (4) étant fixée par une extrémité à l'un des deux supports (2, 3), et étant reliée à la serrure à monnaie (8) par son autre extrémité, et la serrure à monnaie (8) étant fixée à l'autre support (2 ou 3) de poignée, **caractérisé par le fait que** la liaison de la poignée de poussée (4) avec la serrure à monnaie (8) est additionnellement établie par un moyen d'arrêt (18) qui bloque ladite poignée de poussée (4) sur ladite serrure à monnaie (8).

2. Chariot transporteur selon la revendication 1, **caractérisé par le fait que** le moyen d'arrêt (18) traverse au moins partiellement la serrure à monnaie (8).

3. Chariot transporteur selon la revendication 1 ou 2, **caractérisé par le fait que** le moyen d'arrêt (18) se trouve dans une protubérance (9) située dans la serrure à monnaie (8) et reliée à la poignée de poussée (4).

4. Chariot transporteur selon l'une des revendications 1 à 3, **caractérisé par le fait que** la serrure à monnaie (8) comporte un espace intérieur (12) ; et **par le fait que** la protubérance (9) présente une perforation (10) menant à l'espace intérieur (12) et destinée à recevoir le moyen d'arrêt (18).

5. Chariot transporteur selon la revendication 4, **caractérisé par le fait que** la perforation (10) est disposée sur l'axe longitudinal (7) de la poignée de poussée (4).

6. Chariot transporteur selon l'une des revendications 1 à 5, **caractérisé par le fait que** la protubérance (9) est réalisée à la manière d'une cheville expansible.

7. Chariot transporteur selon l'une des revendications 1 à 6, **caractérisé par le fait que** la serrure à monnaie (8) présente une ouverture (13) disposée sur l'axe longitudinal (7) de la poignée de poussée (4) et menant à l'espace intérieur (12).

8. Chariot transporteur selon l'une des revendications 1 à 7, **caractérisé par le fait que** l'espace intérieur (12) est destiné à recevoir le mécanisme d'accouplement (19) de la serrure à monnaie (8) ; et **par le fait que** ledit mécanisme d'accouplement (19) comporte une perforation (20) ou configuration similaire qui est disposée sur l'axe longitudinal (7) de la poignée de poussée (4), et forme un espace affecté au moyen d'arrêt (18).

9. Chariot transporteur selon l'une des revendications 1 à 8, **caractérisé par le fait que** le moyen d'arrêt (18) est engagé vers la perforation (10) de la protubérance (9), à travers l'ouverture (13) et à travers le mécanisme d'accouplement (19).
